# EUROPEAN PATENT SPECIFICATION

(11) **EP 4 048 752 B1**
(45) Date of publication and mention of the grant of the patent: **06.12.2023**
(21) Application number: 20803759.8
(22) Date of filing: 22.10.2020
(51) Int. Cl.: C09J 5/06, C08J 5/12, B32B 25/16, B32B 25/20, B32B 1/00, B32B 25/04

(54) **PROCESS FOR THE MANUFACTURE OF EPDM-SILICONE HYBRID PRODUCTS**
VERFAHREN ZUR HERSTELLUNG VON EPDM-SILIKON-HYBRIDPRODUKTEN
PROCÉDÉ DE FABRICATION DE PRODUITS HYBRIDES EPDM-SILICONE

(30) Priority: 22.10.2019 EP 19204473; 15.04.2020 EP 20169542
(43) Date of publication of application: 31.08.2022
(73) Proprietor: Trelleborg Sealing Profiles Sweden AB, 331 29 Värnamo (SE)
(72) Inventor: BJÖRKQVIST, Markku, 331 42 VÄRNAMO (SE)
(74) Representative: Flügel Preissner Schober Seidel
(86) International application number: PCT/EP2020/079703
(87) International publication number: WO 2021/078837

(56) References cited:
- EP-A1- 2 327 544
- US-A- 5 346 760
- Anonymous: "Alkenyl group", , 1 January 2023 (2023-01-01), pages 1-3, XP093042703, Retrieved from the Internet: URL:https://www.rsc.org/publishing/journal s/prospect/ontology.asp?id=CHEBI:37614&MSI D=b816989f [retrieved on 2023-04-27]

## Description

### Field of the invention

The invention relates to a process for the manufacture of hybrid products comprising at least two different elastomer materials bonded to each other, said at least two different elastomer materials being based on at least one rubber of the ethylene propylene diene monomer (EPDM) type and at least one rubber of the silicone type. The inventive process is particularly useful for the manufacture of EPDM-silicone hybrid sealing profiles.

### Background of the invention

Ethylene-propylene-diene (EPDM) and silicone polymer materials have advantages and disadvantages.

EPDM has good weather resistance (ozone, UV, temperature) and physical/mechanical properties (tearing resistance, compression set, elongation), and its processability allows complicated shapes. Also, it has a good price-performance ratio. Its disadvantages are that the range of possible colors is limited. While black is easy to produce, other colors are difficult to produce. The carbon black used to produce black EPDM is responsible for some of the good physical properties, but replacing carbon black in colored compounds reduces the physical properties of EPDM. Due to the high viscosity of the EPDM compounds wall thicknesses below 0,8 mm are difficult to extrude. Also, the price of colored EPDM materials is much higher than for black EPDM.

Silicone has excellent weather resistance (ozone, UV, temperature) and physical/mechanical properties. The compression set is even better than for EPDM, and the mechanical properties do not change over a wide temperature range. Also, there are no limitations in colors, even transparent is possible, and silicone has good compatibility to structural glazing facade application. The disadvantages of silicone are the relatively low tearing resistance, the bad compound availability, and the high price.

It has long been attempted to make composite materials that combine in the same product the qualities inherent in each of the rubbers of the silicone type and the ethylene-propylene copolymer or terpolymer type. US patent 5 346 760 describes a two-layer composite material based on such rubbers. The layers, however, have a complex composition. The first layer comprises a silicone rubber and an ethylene-propylene copolymer and/or terpolymer rubber. The second layer comprises an ethylene-propylene copolymer and/or terpolymer and a different rubber such as nitrile rubber, styrenebutadiene rubber or natural rubber. Also, both layers need to contain a specified amount of silica with a specified pore volume and average particle size.

EP 2 327 544 A1 discloses a simple silicone-rubber bonded object in which non-flowable substrates, i.e., a three-dimensional silicone rubber elastic substrate molded beforehand and an adherend substrate, were able to be tenaciously bonded to each other without using a flowable curable adhesive or pressure-sensitive adhesive and which is inexpensive and has high productivity. The silicone-rubber bonded object comprises a three-dimensional silicone rubber elastic substrate having hydroxyl groups on the surface and an adherend substrate having hydroxyl groups on the surface. The substrates have been laminated to each other through covalent bonding between the hydroxyl groups of both. The elastic substrate and/or the adherend substrate has undergone corona discharge treatment and/or plasma treatment, whereby the hydroxyl groups have been formed on the surface thereof.

### Object of the invention

It is an object of the invention to provide a process for bonding EPDM rubber material to silicone rubber material to thus allow the manufacture of EPDM-silicone hybrid products that combine the advantages of both EPDM and silicone materials and eliminate the disadvantages of the single materials.

### Solution according to the invention

Any references to singular characteristics or limitations of this specification shall include the corresponding plural characteristic or limitation, and *vice versa* unless otherwise specified or clearly implied to the contrary by the context in which the reference is made. All references to one (including the articles "a" and "the"), two or another number of objects are, provided nothing else is expressly mentioned, meant to be understood as not excluding the presence of further such objects in the invention.

As used herein parentheses are used to designate that something is optionally present, to qualify or further define a previously mentioned term, or to list narrower embodiments.

Unless otherwise indicated, all percent values regarding amounts, ranges, and ratios are based on the weight.

It is to be understood that upper and lower amounts, ranges, and ratios set forth herein may be independently combined. Similarly, the amounts, ranges, and ratios for each element of the invention can be used together with amounts, ranges, and ratios for any of the other elements.

Unless otherwise indicated, each chemical or composition referred to herein should be interpreted as being a commercial grade material which may contain the isomers, byproducts, derivatives, and other such materials which are normally understood to be present in the commercial grade.

Any reference numerals in the patent claims are not meant to be limiting but merely serve to improve the readability of the claims.

According to the invention, the above problem is solved by a process for the manufacture of hybrid products comprising at least two different elastomer materials bonded to each other, said at least two different elastomer materials being based on at least one rubber of the ethylene-propylene-diene (EPDM) type and at least one rubber of the silicone type;
wherein said at least one EPDM rubber material and said at least one silicone rubber material are covulcanized in contact with each other in the presence of a peroxide curing agent; and
wherein said at least one silicone rubber comprises alkenyl functionalized polydialkylsiloxanes of the general formula:

   R₃Si-[O-SiR₂]ₙ-O-SiR₃;
wherein R is selected from the group consisting of C₁-C₈ alkyl and C₂-C₈ alkenyl groups, and n is a natural number specifying the number of repeating units.

The inventive process surprisingly allows the manufacture of EPDM-silicone hybrid products. The EPDM-silicone hybrid products obtained have excellent weather resistance (ozone, UV, temperature) and physical/mechanical properties (in particular tearing resistance, compression set, elongation) which do not change over a wide temperature range. There are no limitations in colors, even transparent is possible. The processability of the material allows complicated shapes (e.g., profiles), and the material has good compatibility to structural glazing facade application. Also, the price-performance ratio is very good.

The inventive process is particularly useful for the manufacture of EPDM-silicone hybrid sealing profiles, e.g., for window frames or door frames. An advantage is that in comparison to full silicone profiles the manufacturing costs are significantly reduced.

### Preferred embodiments of the invention

The silicone rubber used in the inventive process comprises alkenyl functionalized polydialkylsiloxanes of the general formula:

R₃Si-[O-SiR₂]ₙ-O-SiR₃;

wherein R is selected from the group consisting of C₁-C₈ alkyl and C₂-C₈ alkenyl groups, and n is a natural number specifying the number of repeating units.

Suitable C₁-C₈ alkyl groups may have straight or branched chains and may be unsubstituted as well as substituted. In one embodiment of the inventive process, the used alkenyl functionalized polydialkylsiloxane comprises C₁-C₆ or C₁-C₄ alkyl groups.

Specific examples for alkyl groups are methyl, ethyl, n-propyl, iso-propyl, n-butyl, iso-butyl, tert.-butyl, n-pentyl, iso-pentyl, n-hexyl, iso-hexyl, n-heptyl, iso-heptyl, n-octyl or iso-octyl groups. The skilled artisan appreciates that for higher alkyl groups the term "iso" comprises more than one possible isomer. All possible isomers of the above alkyl groups are suitable in the inventive process.

Suitable C₂-C₈ alkenyl groups may have straight or branched chains and may be unsubstituted as well as substituted. Higher alkenyl groups may contain more than one double bond which may be conjugated or not. In one embodiment of the inventive process, the used alkenyl functionalized polydialkylsiloxane comprises C₂-C₆ or C₂-C₄ alkenyl groups.

Specific examples for alkenyl groups are ethenyl (vinyl), n-propenyl, iso-propenyl, n-butenyl, iso-butenyl, tert.-butenyl, n-pentenyl, iso-pentenyl, n-hexenyl, iso-hexenyl, n-heptenyl, iso-heptenyl, n-octenyl or iso-octenyl groups. The skilled artisan appreciates that for higher alkenyl groups the term "iso" comprises more than one possible isomer. All possible isomers of the above alkenyl groups are suitable in the inventive process.

The degree of alkenyl functionalization (the content of alkenyl groups) of the polydialkylsiloxanes used in the inventive process is not subject to any special restrictions or limitations and may be selected by the skilled person according to practical circumstances or as desired. The content of alkenyl groups may be, for example, 0.01 to 10 mol%, expecially 0.1 to 1 mol% of the entire R groups.

The natural number n specifying the number of repeating units in the used alkylene functionalized polydialkylsiloxane is not subject to any special restrictions or limitations and may be selected by the skilled person according to practical circumstances or as desired. For example, n may be selected so that the used alkylene functionalized polydialkylsiloxane has a suitable viscosity for extrusion.

In one embodiment of the invention, the used alkenyl functionalized polydialkylsiloxan is a vinyl functionalized polydimethylsiloxane. A suitable vinyl functionalized polydimethylsiloxane is, e.g., commercially available under the trade name ELASTOSIL^{®} R 401/70 S.

The EPDM rubbers used in the inventive process are not subject to any special restrictions or limitations and may be selected by the skilled person according to practical circumstances or as desired. The diene component of the EPDM rubber may be a conjugated or non-conjugated diene. Exemplary of dienes employed in the EPDM are 5-methylene-2-norbornene, 5-ethylidene-2-norbornene, cyclooctadiene, 2-methyl-1,4-pentadiene, 1,4-hexadiene, 4-methyl-1,4-hexadiene, 1,4-heptadiene, 4-methyl-1,4-heptadiene, 4-ethyl-1,4-heptadiene, 1,5-heptadiene, 1,5-octadiene, 5-methyl-1,5-heptadiene, 2-methyl-1,5-hexadiene, 1,6-octadiene, 6-methyl-1,6-octadiene, 2-methyl-1,6-heptadiene, 1,9-decadiene, 1,13-tetradecadiene, vinylcyclohexene, vinylnor-bornene, dicyclopentadiene, 1,3,7-octatriene, and 1,5,9-decatriene. These diene compounds may be used alone or in admixture of two or more.

The peroxide curing agent used in the inventive process is not subject to any special restrictions or limitations and may be selected by the skilled person according to practical circumstances or as desired. Examples for suitable peroxides are acetyl peroxide, benzoyl peroxide, lauroyl peroxide, bis-(2,4-dichlorobenzoyl)peroxide, dicumyl peroxide, tert-butyl peroxyperbenzoate, tert-butyl peroxypivalate, di-tert-butyl peroxide, 2,5-bis-(tert-butylperoxy)-2,5-dimethylhexane, and bis(tert-butyl peroxy isopropyl)benzene. The peroxide curing agent may be used, for example, in an amount of about 1 to 50 parts by weight per 100 parts by weight of the materials to be polymerized by free radicals. It should be noted that curing could also be performed by radiation if desired.

In one embodiment of the inventive process, when the used alkenyl functionalized polydialkylsiloxan is a vinyl functionalized polydimethylsiloxane (e.g., ELASTOSIL^{®} R 401/70 S, the used curing agent may suitably be bis-(2,4-dichlorobenzoyl)peroxide, dicumyl peroxide, or 2,5-bis-(tert-butylperoxy)-2,5-dimethyl-hexane.

In accordance with the invention, the EPDM-silicone hybrid product is manufactured directly by coextrusion (multiextrusion) of a curable composition comprising a suitable EPDM compound and a curable composition comprising a suitable alkenyl functionalized polydialkylsiloxane compound on a coextruder (multiextruders), followed by covulcanization (multivulcanization). The coextrusion(multiextrusion) may be performed, for example, at a temperature in the range of from 40 to 250 °C, such as 100 to 250 °C or 100 to 200 °C, preferably in the range of from 40 to 70 °C, and, for example, for a period of from 3 minutes to 3 hours. Optionally, a pressure ranging, for example, from 2 to 50 MPa, preferably 30 to 50 MPa, may be applied during extrusion. The covulcanization (multivulcanization) is performed in the vulcanization zone of the extruder line (e.g., using a salt bath, hot air, ultra-high frequency (UHF) or infrared radiation) and may be performed, for example, at a temperature in the range of from 180 to 270 °C. The covulcanization (multivulcanization) may be conducted, for example, for a period of from 30 seconds to 30 minutes.

In one embodiment of the invention 3, to 4, or even more different elastomer materials are used.

In another embodiment of the invention two different EPDM rubber materials and one silicone rubber material are used. In another embodiment of the inventive process one EPDM rubber material and two silicone rubber materials are used.

The skilled person appreciates that the invention is not limited to coextrusion, but that also triple-extrusion or quattro-extrusion (multiextrusion) may be used if suitable or desired.

In one embodiment of the inventive process, since EPDMs cures fast and silicones cure slowly, the curing speed of the EPDM compound and the silicone compound are advantageously adapted to each other. Methods for the adaptation of different curing speeds are known in the art and may involve, for example, the use of different curing agents or different curing agent concentrations.

In another embodiment of the inventive process, the flow speed of the EPDM compound and the silicone compound in the extruder are advantageously adapted to each other so that the compounds have a similar flow speed in the contact areas. Methods for the adaptation of flow speeds in an extruder are known in the art.

In yet another embodiment of the invention, the curing speeds and the flow speeds of the EPDM compound and the silicone compound are advantageously adapted to each other.

In yet another embodiment of the invention, postcuring of the silicone layer is conducted, preferably for 3 to 24 hours, e.g., 3 hours.

The skilled person appreciates that the used curable composition comprising a suitable EPDM compound and/or the curable composition comprising a suitable alkenyl functionalized polydialkylsiloxane compound may optionally contain various known additives such as reinforcing or extending fillers, plasticizers, lubricating agents, blowing agents, antioxidants, anti-UV additives, colorants, and pigments. Specific examples for additives are ground quartz, calcinated clays, calcium carbonate, zinc oxide, iron oxide, titanium oxide, cobalt oxide, magnesium oxide, aluminium oxide, carbon black, magnesium and aluminium silicates, aluminium, calcium and barium sulfates, asbestos, glass and carbon fibers, synthetic fibers such as aramid, polyester, polyamide and rayon. Various known mixing methods are possible for incorporating the above additives into the curable compositions, the order of introduction of the various constituents not being critical.

In one embodiment of the invention the silicone rubber is present on the surface of the hybrid product. The thickness of the applied silicone rubber may be variable. The lowest thickness may be, for example, 2 mm to 0.01 mm or 0.5 mm to 0.05 mm.

In a further preferred embodiment of the invention a layer of silicone is extruded on the EPDM part also around the foot of a EPDM-silicone hybrid profile. Preferably it is a thin layer having a thickness of 2 mm to 0.01 mm, more preferably 0.5 mm to 0.05 mm.

This means that when the profile is mounted in the groove on a window frame, or door frame etc. the silicone layer is locked inside of the groove. Also coating around the whole profile is possible. An advantage of this is that dyeing of the profile is possible with colors that cannot be used with EPDM, e.g., for making a gold colored profile.

### Brief description of the drawings

Figure 1 is a sectional view of an EPDM-silicone hybrid sealing profile manufactured using the inventive process.
Figure 2 is a sectional view of an EPMD-silicone (EPDM-silicone) hybrid sealing profile wherein a part of the grooves are covered with a thin layer of silicone.
Figure 3 is a sectional view of an EPMD-silicone hybrid sealing profile wherein all the grooves are covered with a thin layer of silicone.
Figure 4 is a sectional view of a further embodiment of an EPDM-silicone hybrid sealing profile wherein a part of the surface is covered with a thin layer of silicone. TLT = Thin Layer Technology.
Figure 5 is a sectional view of a further embodiment of an EPDM-silicone hybrid profile wherein a thin layer of silicone is extruded on the EPDM part also around the foot of the EPDM-silicone hybrid profile.
Figure 6 is a schematic representation of coextrusion which can be used in the invention.
Figure 7 is a schematic drawing of triple-extrusion which can be used in the invention.
Figure 8 is a schematic drawing of quattro-extrusion which can be used in the invention.

### Detailed description of the drawings

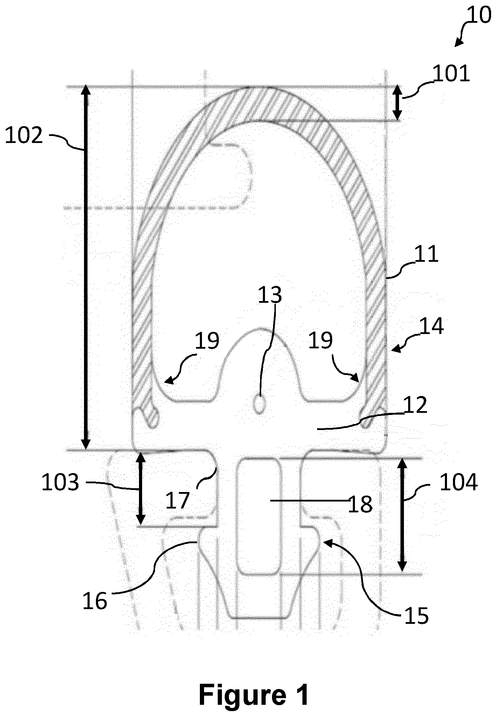

Figure 1 shows an EPDM-silicone hybrid sealing profile 10 having a sealing section 14 and a groove 15 which can be used for mating the EPDM-silicone hybrid sealing profile10 to a window or a door frame.

The sealing section 14 consists of a first elastomer material 11 being silicone having a length 102 of 5.5±0.7 cm.

The foot 15 consists of a second elastomer material 12 being EPDM and comprises a bridge 17 and a hook or a groove 16. The bridge 17 has a length 103 of 1.6 ±0.15 cm. The foot 15 comprises a core 18 inside the foot 15 having a length 104 of 2.4 cm. The foot 15 further provides a recess for a cord 13.

The sealing section 14 is coupled to the groove 15 at a joining section 19 which provides a positive locking, non-positive locking and/or a bonded joint.

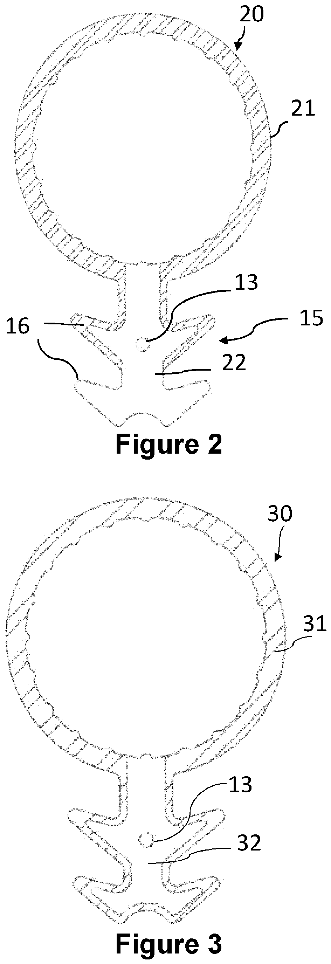

Figures 2 to 5 show alternative embodiments of an EPDM-silicone hybrid sealing profile described above. The same or functionally identical parts may use the above mentioned reference signs.

Figure 2 shows a second embodiment of the EPDM-silicone hybrid sealing profile 20. The shown embodiment consists of a first elastomer material 21 being silicone and a second elastomer material 22 being EPDM. The foot 15 of the shown embodiment has a multiple of grooves 16. The first elastomer material 21 can extend along the outer surface of some of the grooves 26 such that a part of the grooves 26 are covered with a thin layer of silicone.

Figure 3 shows a third embodiment of the EPDM-silicone hybrid sealing profile 30. The shown embodiment consists of a first elastomer material 31 being silicone and a second elastomer material 32 being EPDM. The first elastomer material 31 can extend along the outer surface of the grooves 36 such that all of the grooves 26 are covered with a thin layer of silicone.

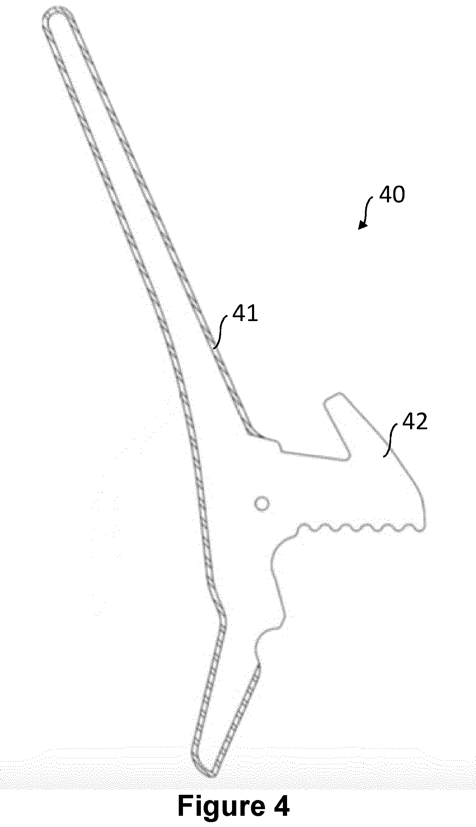

Figure 4 shows a forth embodiment of the EPDM-silicone hybrid sealing profile 40 comprising a first elastomer material 41 being TLT Silicone and a second material 42. The first elastomer material 41 covers with a thin layer of silicone a section of the second elastomer material 42.

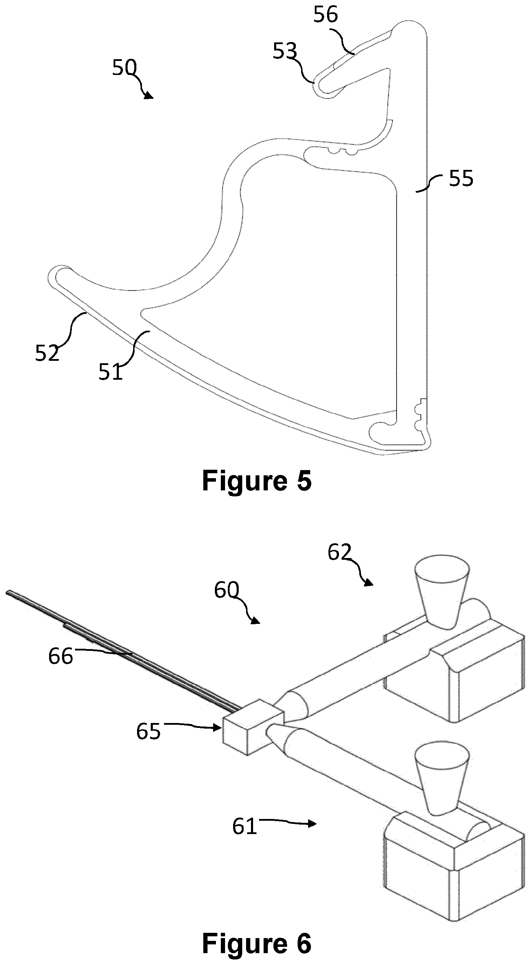

Figure 5 shows a fifth embodiment of the EPDM-silicone hybrid sealing profile 50 comprising a first elastomer material 51 being Silicone 60, a second elastomer material 52 being high friction silicon of an alternative special colour, a third elastomer material 53 being high friction silicon, a forth elastomer material 55 being EPDM 80 to 90 sh and a fifth elastomer material 56 being low friction EPDM.

A thin layer of the second elastomer material 52, the third elastomer material 53 and the fifth elastomer material 56 is extruded on the forth elastomer material 55.

Figure 6 shows a coextrusion system comprising a first extruder 61 and a second extruder 62 providing elastomer material to a die 65 to produce a EPDM-silicone hybrid profile 66 as shown in Figure 1 to 4.

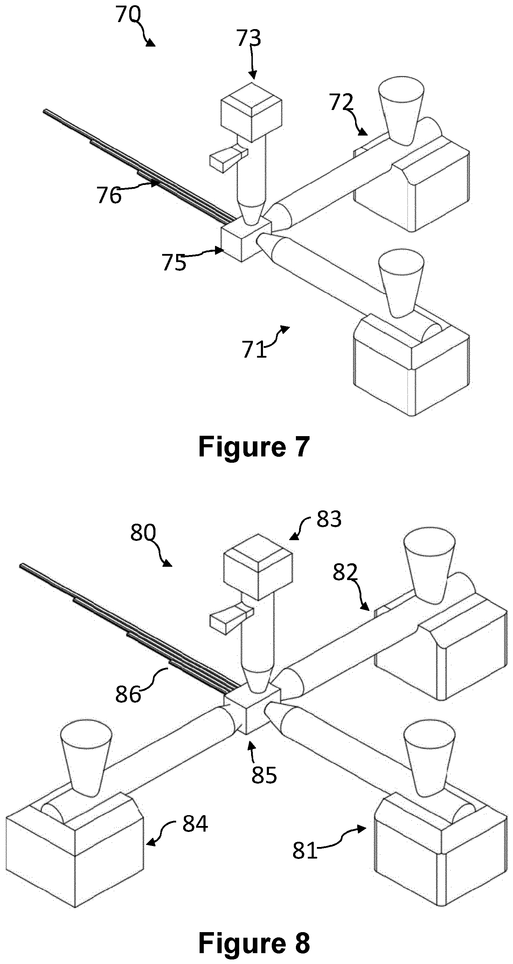

Figure 7 shows a triple-extrusion system 71 comprising a first extruder 71, a second extruder 72 and a third extruder 73 providing elastomer material to a die 75 to produce a EPDM-silicone hybrid profile 76.

Figure 8 shows a quattor-extrusion 81 comprising a first extruder 81, a second extruder 82, a third extruder 83 and a forth extruder 84 providing elastomer material to a die 85 to produce a EPDM-silicone hybrid profile 86 as shown in Figure 5.

### Reference signs

- 10: EPDM-silicone hybrid sealing profile
- 11: first elastomer material
- 12: second elastomer material
- 13: cord
- 14: sealing section
- 15: groove
- 16: hook
- 17: bridge
- 18: core
- 19: joining section

- 101: thickness of first elastomer material
- 102: length of sealing section
- 103: length of bridge
- 104: length of core

- 20: EPDM-silicone hybrid sealing profile
- 21: first elastomer material
- 22: second elastomer material

- 30: EPDM-silicone hybrid sealing profile
- 31: first elastomer material
- 32: second elastomer material
- 33: third elastomer material
- 34: cord

- 40: EPDM-silicone hybrid sealing profile
- 41: first elastomer material
- 42: second elastomer material

- 50: EPDM-silicone hybrid sealing profile
- 51: first elastomer material
- 52: second elastomer material
- 53: third elastomer material
- 54: forth elastomer material
- 55: fifth elastomer material
- 56: sixth elastomer material

- 60: coextruder
- 61: first coextruder
- 62: second coextruder
- 65: die
- 66: EPDM-silicone hybrid sealing profile

- 70: triple-extruder
- 71: first coextruder
- 72: second coextruder
- 73: third coextruder
- 75: die
- 76: EPDM-silicone hybrid sealing profile

- 80: quattro-extruder
- 81: first coextruder
- 82: second coextruder
- 83: third coextruder
- 84: forth coextruder
- 85: die
- 86: EPDM-silicone hybrid sealing profile

## Claims

1. A process for the manufacture of hybrid products comprising at least two different elastomer materials bonded to each other, said at least two different elastomer materials being based on at least one rubber of the ethylene propylene diene monomer (EPDM) type and at least one rubber of the silicone type;
wherein said at least one EPDM rubber material and said at least one silicone rubber material are covulcanized in contact with each other in the presence of a peroxide curing agent; and
wherein said at least one silicone rubber comprises alkenyl functionalized polydialkylsiloxanes of the general formula:
R₃Si-[O-SiR₂]ₙ-O-SiR₃;
wherein R is selected from the group consisting of C₁-C₈ alkyl and C₂-C₈ alkenyl groups, and n is a natural number specifying the number of repeating units;
**characterised in that** the hybrid product is manufactured directly by coextrusion of a curable composition comprising a suitable EPDM compound and a curable composition comprising a suitable alkenyl functionalized polydialkylsiloxane compound on a coextruder, followed by covulcanization.

2. The process of claim 1, wherein the C₁-C₈ alkyl groups are selected from the group consisting of methyl, ethyl, n-propyl, iso-propyl, n-butyl, iso-butyl, tert.-butyl, n-pentyl, iso-pentyl, n-hexyl, iso-hexyl, n-heptyl, iso-heptyl, n-octyl and iso-octyl groups, and
wherein the C₂-C₈ alkenyl groups are selected from the group consisting of ethenyl (vinyl); n-propenyl, iso-propenyl, n-butenyl, iso-butenyl, tert.-butenyl, n-pentenyl, iso-pentenyl, n-hexenyl, iso-hexenyl, n-heptenyl, iso-heptenyl, n-octenyl and iso-octenyl groups.

3. The process of claim 1 or 2, wherein the diene component of the EPDM rubber is a conjugated or non-conjugated diene.

4. The process of claim 3, wherein the diene component is selected from the group consisting of 5-methylene-2-norbornene, 5-ethylidene-2-norbornene, cyclooctadiene, 2-methyl-1,4-pentadiene, 1,4-hexadiene, 4-methyl-1,4-hexadiene, 1,4-heptadiene, 4-methyl-1,4-heptadiene, 4-ethyl-1,4-heptadiene, 1,5-heptadiene, 1,5-octadiene, 5-methyl-1,5-heptadiene, 2-methyl-1,5-hexadiene, 1,6-octadiene, 6-methyl-1,6-octadiene, 2-methyl-1,6-heptadiene, 1,9-decadiene, 1,13-tetradecadiene, vinylcyclohexene, vinylnorbornene, dicyclopentadiene, 1,3,7-octatriene, and 1,5,9-decatriene.

5. The process of any one of claims 1 to 4 , wherein the peroxide curing agent is selected from the group consisting of acetyl peroxide, benzoyl peroxide, lauroyl peroxide, bis-(2,4-dichlorobenzoyl)peroxide, dicumyl peroxide, tert-butyl peroxyperbenzoate, tert-butyl peroxypivalate, di-tert-butyl peroxide, 2,5-bis-(tert-butylperoxy)-2,5-dimethylhexane, and bis(tert-butyl peroxy isopropyl)benzene.

6. The process of any one of claims 1 to 5, wherein three or four different elastomer materials are used.

7. The process of any one of claims 1 to 6, wherein two different EPDM rubber materials and one silicone rubber material, or one EPDM rubber material and two silicone rubber materials are used.

8. The process of any one of claims 1 to 7, wherein the silicone rubber is present on the surface of the hybrid product.

9. The process of claim 8, wherein the thickness of the applied silicone rubber is variable.

10. The process of claim 8 or 9, wherein the lowest thickness of the applied silicone rubber is 2 mm to 0.01 mm.

11. The process of claim 10, wherein the lowest thickness is 0.5 mm to 0.05 mm.

12. The process of any one of claims 1 to 11, wherein the covulcanization is performed at a temperature in the range of 180 °C to 270 °C.

13. The process of any one of claims 1 to 12, wherein the covulcanization is performed for a period of from 30 seconds to 30 minutes.

14. EPDM-silicone hybrid sealing profile obtainable by the process according to any of claims 1 to 13.

15. Use of the process of any one of claims 1 to 13 for the manufacture of EPDM-silicone hybrid sealing profiles.

## Patentansprüche

1. Verfahren zur Herstellung von Hybridprodukten, umfassend mindestens zwei verschiedene, miteinander verbundene Elastomermaterialien, wobei die mindestens zwei verschiedenen Elastomermaterialien auf mindestens einem Kautschuk vom Typ Ethylen-Propylen-Dien-Monomer (EPDM) und mindestens einem Kautschuk vom Typ Silikon basieren;
wobei das mindestens eine EPDM-Kautschukmaterial und das mindestens eine Silikon-Kautschukmaterial in Gegenwart eines Peroxidhärtungsmittels in Kontakt miteinander kovulkanisiert werden; und
wobei der mindestens einen Silikon-Kautschuk alkenylfunktionalisierte Polydialkylsiloxane mit der allgemeinen Formel umfasst:
R₃Si-[O-SiR₂]n-O-SiR₃;
wobei R ausgewählt ist aus der Gruppe bestehend aus C₁-C₈-Alkyl- und C₂-Ca-Alkenylgruppen, und n eine natürliche Zahl ist, welche die Anzahl der sich wiederholenden Einheiten angibt;
**dadurch gekennzeichnet, dass** das Hybridprodukt direkt durch Koextrusion einer härtbaren Zusammensetzung, die eine geeignete EPDM-Verbindung umfasst, und einer härtbaren Zusammensetzung, die eine geeignete alkenylfunktionalisierte Polydialkylsiloxanverbindung umfasst, auf einem Koextruder und anschließender Kovulkanisation hergestellt wird.

2. Verfahren nach Anspruch 1, wobei die C₁-C₈-Alkylgruppen ausgewählt sind aus der Gruppe bestehend aus Methyl-, Ethyl-, n-Propyl-, iso-Propyl-, n-Butyl-, iso-Butyl-, tert.-Butyl-, n-Pentyl-, iso-Pentyl-, n-Hexyl-, iso-Hexyl-, n-Heptyl-, iso-Heptyl-, n-Octyl- und iso-Octylgruppen, und
wobei die C₂-C₈-Alkenylgruppen ausgewählt sind aus der Gruppe bestehend aus Ethenyl (Vinyl)-; n-Propenyl-, iso-Propenyl-, n-Butenyl-, iso-Butenyl-, tert.-Butenyl-, n-Pentenyl-, iso-Pentenyl-, n-Hexenyl-, iso-Hexenyl-, n-Heptenyl-, iso-Heptenyl-, n-Octenyl- und iso-Octenylgruppen.

3. Verfahren nach Anspruch 1 oder 2, wobei die Dienkomponente des EPDM-Kautschuks ein konjugiertes oder nicht-konjugiertes Dien ist.

4. Verfahren nach Anspruch 3, wobei die Dienkomponente ausgewählt ist aus der Gruppe bestehend aus 5-Methylen-2-norbornen, 5-Ethyliden-2-norbornen, Cyclooctadien, 2-Methyl-1,4-Pentadien, 1,4-Hexadien, 4-Methyl-1,4-Hexadien, 1,4-Heptadien, 4-Methyl-1,4-Heptadien, 4-Ethyl-1, 4-Heptadien, 1,5-Heptadien, 1,5-Oktadien, 5-Methyl-1,5-Heptadien, 2-Methyl-1,5-Hexadien, 1,6-Oktadien, 6-Methyl-1,6-Oktadien, 2-Methyl-1, 6-Heptadien, 1,9-Decadien, 1,13-Tetradecadien, Vinylcyclohexen, Vinylnorbornen, Dicyclopentadien, 1,3,7-Octatrien und 1,5,9-Decatrien.

5. Verfahren nach einem der Ansprüche 1 bis 4, wobei das Peroxidhärtungsmittel ausgewählt ist aus der Gruppe bestehend aus Acetylperoxid, Benzoylperoxid, Lauroylperoxid, Bis-(2,4-dichlorbenzoyl)peroxid, Dicumylperoxid, tert-Butylperoxyper-benzoat, tert-Butylperoxypivalat, Di-tert-Butylperoxid, 2,5-Bis-(tert-Butylperoxy)-2,5-dimethylhexan und Bis-(tert-Butylperoxyisopropyl)benzol.

6. Verfahren nach einem der Ansprüche 1 bis 5, wobei drei oder vier verschiedene Elastomermaterialien verwendet werden.

7. Verfahren nach einem der Ansprüche 1 bis 6, wobei zwei verschiedene EPDM-Kautschukmaterialien und ein Silikon-Kautschukmaterial oder ein EPDM-Kautschukmaterial und zwei Silikon-Kautschukmaterialien verwendet werden.

8. Verfahren nach einem der Ansprüche 1 bis 7, wobei der Silikon-kautschuk auf die Oberfläche des Hybridprodukts aufgebracht wird.

9. Verfahren nach Anspruch 8, wobei die Dicke des aufgetragenen Silikon-Kautschuks variabel ist.

10. Verfahren nach Anspruch 8 oder 9, wobei die geringste Dicke des aufgetragenen Silikon-Kautschuks 2 mm bis 0,01 mm beträgt.

11. Verfahren nach Anspruch 10, wobei die geringste Dicke 0,5 mm bis 0,05 mm beträgt.

12. Verfahren nach einem der Ansprüche 1 bis 11, wobei die Kovulkanisation bei einer Temperatur im Bereich von 180 °C bis 270 °C durchgeführt wird.

13. Verfahren nach einem der Ansprüche 1 bis 12, wobei die Kovulkanisation über einen Zeitraum von 30 Sekunden bis 30 Minuten durchgeführt wird.

14. EPDM-Silikon-Hybrid-Dichtungsprofil, erhältlich nach dem Verfahren gemäß einem der Ansprüche 1 bis 13.

15. Verwendung des Verfahrens nach einem der Ansprüche 1 bis 13 zur Herstellung von EPDM-Silikon-Hybrid-Dichtungsprofilen.

## Revendications

1. Un procédé de fabrication de produits hybrides comprenant au moins deux matériaux élastomères différents liés l'un à l'autre, lesdits au moins deux matériaux élastomères différents étant à base d'au moins un caoutchouc du type éthylène-propylène-diène monomère (EPDM) et d'au moins un caoutchouc du type silicone ;
dans lequel ledit au moins un matériau en caoutchouc EPDM et ledit au moins un matériau en caoutchouc silicone sont covulcanisés en contact l'un avec l'autre en présence d'un agent de durcissement au peroxyde ; et
dans lequel ledit au moins un caoutchouc de silicone comprend des polydialkylsiloxanes fonctionnalisés par des alcényles de la formule générale :
R₃Si-[O-SiR₂]ₙ-O-SiR₃ ;
dans laquelle R est choisi dans le groupe constitué des groupes alkyle en C1-C8 et alcényle en C2-C8, et n est un nombre naturel spécifiant le nombre d'unités répétitives ;
**caractérisé en ce que** le produit hybride est fabriqué directement par coextrusion d'une composition durcissable comprenant un composé EPDM approprié et d'une composition durcissable comprenant un composé polydialkylsiloxane fonctionnalisé alcényle approprié sur une coextrudeuse, suivie d'une covulcanisation.

2. Le procédé selon la revendication 1, dans lequel les groupes alkyle C1-C8 sont choisis dans le groupe constitué des groupes méthyle, éthyle, n-propyle, iso-propyle, n-butyle, iso-butyle, tert.-butyle, n-pentyle, iso-pentyle, n-hexyle, iso-hexyle, n-heptyle, iso-heptyle, n-octyle et iso-octyle, et
dans lequel les groupes alcényles en C2-C8 sont choisis dans le groupe constitué par les groupes éthényle (vinyle), n-propényle, iso-propényle, n-butényle, iso-butényle, tert.-butényle, n-pentényle, iso-pentényle, n-hexényle, iso-hexényle, n-heptényle, iso-heptényle, n-octényle et iso-octényle.

3. Le procédé selon la revendication 1 ou 2, dans lequel le composant diénique de la caoutchouc EPDM est un diène conjugué ou non conjugué.

4. Le procédé selon la revendication 3, dans lequel le composant diénique est choisi dans le groupe constitué de 5-méthylène-2-norbornène, 5-éthylidène-2-norbornène, cy-clooctadiène, 2-méthyl-1,4-pentadiène, 1,4-hexadiène, 4-méthyl-1,4-hexadiène, 1,4-heptadiène, 4-méthyl-1,4-heptadiène, 4-éthyl-1, 4-heptadiène, 1,5-heptadiène, 1,5-octadiène, 5-méthyl-1,5-heptadiène, 2-méthyl-1,5-hexadiène, 1,6-octadiène, 6-méthyl-1,6-octadiène, 2-méthyl-1, 6-heptadiène, 1,9-décadiène, 1,13-tétradécadiène, vinylcyclohexène, vinylnorbornène, dicyclopentadiène, 1,3,7-octatriène et 1,5,9-décatriène.

5. Le procédé selon l'une quelconque des revendications 1 à 4, dans lequel l'agent de durcissement peroxyde est choisi dans le groupe constitué par le peroxyde d'acétyle, le peroxyde de benzoyle, le peroxyde de lauroyle, le peroxyde de bis-(2,4-dichlorobenzoyle), peroxyde de dicumyle, peroxyper-benzoate de tert-butyle, peroxypivalate de tert-butyle, peroxyde de di-tert-butyle, 2,5-bis-(tert-butylperoxy)-2,5-diméthylhexane et bis(tert-butylperoxy isopropyl)benzène.

6. Le procédé selon l'une quelconque des revendications 1 à 5, dans lequel on utilise trois ou quatre matériaux élas-tomères différents.

7. Le procédé selon l'une quelconque des revendications 1 à 6, dans lequel on utilise deux matériaux de caoutchouc EPDM différents et un matériau de caoutchouc silicone, ou un matériau de caoutchouc EPDM et deux matériaux de caoutchouc silicone.

8. Le procédé selon l'une quelconque des revendications 1 à 7, dans lequel le caoutchouc de silicone est présent sur la surface du produit hybride.

9. Le procédé selon la revendication 8, dans lequel l'épaisseur du caoutchouc de silicone appliqué est variable.

10. Le procédé selon la revendication 8 ou 9, dans lequel l'épaisseur la plus faible du caoutchouc silicone appliqué est de 2 mm à 0,01 mm.

11. Le procédé selon la revendication 10, dans lequel l'épaisseur la plus faible est de 0,5 mm à 0,05 mm.

12. Le procédé selon l'une des revendications 1 à 11, dans lequel la covulcanisation est effectuée à une température comprise entre 180 °C et 270 °C.

13. Le procédé selon l'une quelconque des revendications 1 à 12, dans lequel la covulcanisation est effectuée pendant une période allant de 30 secondes à 30 minutes.

14. Profilé d'étanchéité hybride EPDM-silicone susceptible d'être obtenu par le procédé selon l'une quelconque des revendications 1 à 13.

15. Utilisation du procédé selon l'une quelconque des revendications 1 à 13 pour la fabrication de profilés d'étanchéité hybrides EPDM-silicone.
